# EUROPEAN PATENT APPLICATION

(11) **EP 0 701 108 A1**
(43) Date of publication of application: **13.03.1996**
(21) Application number: 94306554.0
(22) Date of filing: 06.09.1994
(51) Int. Cl.: G01F 11/08, G01F 11/02, A47K 5/12

(54) **A metering device**

(71) Applicant: THE PROCTER & GAMBLE COMPANY, Cincinnati, Ohio 45202 (US)
(72) Inventor: Guillou A.A, B-1200 Brussel (BE); Van Rompuy T., B-2800 Mechelen (BE); Kelsey S.F., Ealing, London W5 1QR (GB)
(74) Representative: Engisch, Gautier

(57) **Abstract**

The present invention provides a container (10) with a metering device (20) for liquid products, especially for liquid detergents. This metering device allows to vary the metered dose dispensed form said container just prior the use of said container. Said metering device comprises a plate (21). By adjusting the height of said plate in the inside of said container, the quantity of liquid product which can be dispensed from said container is variable.

## Description

### Field of the Invention

The present invention relates to a container comprising a metering device for dispensing an accurately metered amount of liquid product. In particular, said metering device allows to accurately meter a variable amount of liquid product.

### Background of the Invention

Metering devices are known in the art. These metering devices allow to measure out a specific and uniform amount of the total content from a container without a separate manual operation with a separate measuring device, like a measuring cup for example. Indeed, this manual operation is not only time consuming and messy, but may also result in an inaccurate measuring. In particular for concentrated liquid detergents, the efficacy of these products is dependent upon the accuracy of the product amount used.

On the other hand, the amount of the detergent has to be varied for different washing conditions by the user. Different washing conditions can be performed with an incompletely filled dish- or laundry washing machine or different degrees of water hardness. Indeed, for example, an increased amount of detergent has to be used to counterbalance a higher degree of water hardness or vice versa. Therefore the user should have the possibility to measure out smaller or greater amounts of detergent in an accurate manner to obtain optimal efficacy of said detergent for all washing conditions without wasting.

Furthermore, concentrated liquid detergent may be characterized by a high viscosity. For this type of product, a measuring cup is not suitable. Indeed, the high viscosity results in a very slow product flow from the container into said measuring cup. The flow time is practically doubled by pouring this product from said measuring cup to dish washing or laundry machine dispensers. Furthermore, a considerable amount of product remains stuck in the container and/or in the measuring cup without the possibility to get it out. A possible solution to ensure the complete distribution of said viscous product is to have a squeezable container. But this may result in an inaccurate dispensing of an uncontrolled amount in a measuring cup. Therefore the user may be obliged to pour part of the quantity inside said measuring cup back again in said container and so forth until the correct quantity is reached. This operation is very tedious and at the end not very accurate with the possibility of unnecessary wasting.

WO 91/0928 describes a metering device for liquid products. This metering device is able to dispense successive, uniform volumes of liquid from a container, i.e. no possibility is given to vary this uniform volume of liquid. The only possibility to vary this volume is to change completely said metering device with another which is able to meter greater or smaller amounts of liquid from a container. Furthermore, the amount measured out in said metering device cannot be squeezed to the exterior of said device. Indeed, said metering device is an independent part inserted in the opening of a container. Therefore, this metering device cannot be squeezed from the exterior of said container to dispense the metered quantity.

US-2 896 826 discloses a measuring dispenser adapted to regulate the amount dispensed from its container. Nevertheless, this measuring dispenser is not adequate for liquid substances in general. Indeed, the compartment wall (13) does not separate the measuring compartment 10' from the rest of the container. Therefore, also the interior of the outlet channel 6' is always filled with the liquid when the level of the liquid product is above said compartment wall (13). This results in an inaccurate measurement of the dispensed volume. The inaccuracy is even more dramatic if the container has to be squeezed. Indeed, this measuring dispenser does not ensure that the complete amount in the measurement compartment 10' is pushed through said outlet channel 6'. For example, part of the amount in said measurement compartment may be pressed back again in the container through the passageway (14).

It is therefore an object of the present invention to provide a squeezable container with an accurate metering device which enables to meter greater or smaller amounts of a viscous, liquid content in an accurate manner just prior to the use of said container without wasting. Another object of the present invention is a method of utilizing said metering device regulating the amount of dispensed content in a pouring action before the pouring action itself.

### Summary of the Invention

The present invention provides a container (10) for viscous, liquid products having a squeezable side wall (11). Said container further comprises an opening (16) and a metering device (20). Said metering device comprises a plate (21), which is able to be reversibly slid to the inside of said container to define a quantity of said product to be dispensed. Said plate is able to close said opening (16). The sliding of said plate is controlled from the exterior of said container. Said plate comprises at least an orifice (24). Said orifice (24) is smaller than said opening (16). Furthermore, said orifice is not vertically aligned with said opening.

### Brief Description of the Figures

Figure 1 shows a cross sectional view of the container with the metering device in an embodiment according to the present invention.

Figure 2 is the bottom view of the same metering device of Figure 1.

Figures 3a to 3d illustrate the use of the container of Figure 1 in a cross sectional view.

Figure 4 shows a cross sectional view of another embodiment of the present invention.

### Detailed Description of the Invention

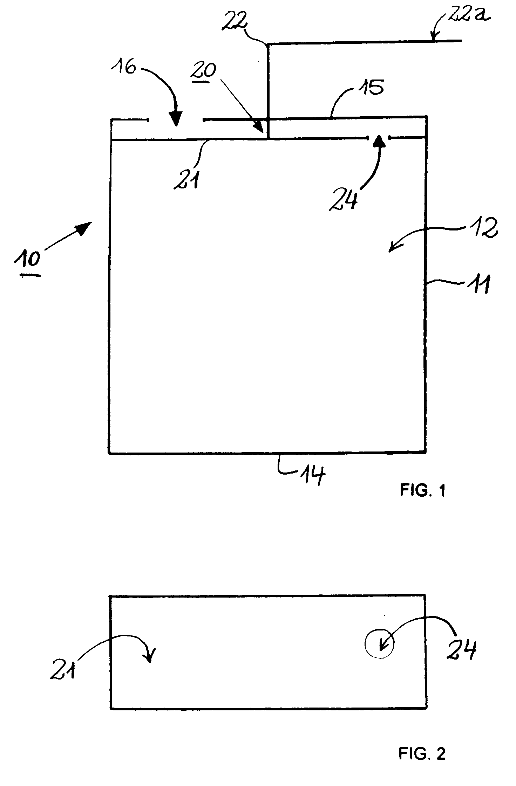

A cross sectional view of an embodiment of the present invention is shown in Figure 1. The container (10) according to the present invention comprises a side wall (11) defining a hollow body (12) with a base wall (14) and a top wall (15) substantially parallel to said base wall. The opening (16) brings in communication the interior of said hollow body (12) with the exterior of said container. Said opening may be located on the top wall (15) or on the base wall (14). Said opening is closed with any reversibly detachable cap. Said cap is preferably hinged to said top or base wall to prevent losing of said cap. Said container further comprises a metering device (20).

Said side wall (11) is squeezable. This means that said side wall may be depressed by exerting a force substantially perpendicular to said side wall itself. In this manner, the internal volume of said container is reduced. Therefore the content of said container is consequently forced to flow through said opening (16). This squeezing of said container allows also to achieve a faster dispensing of the content, especially for viscous contents. Said container contains preferably viscous, liquid products, as for example viscous, liquid detergents. The shape of said container may be rounded or polygonal.

The base wall (14) may be adapted to receive the top wall (15) of another container to allow a stable stacking of a container over another. This means that said base wall has the reversed features of the top wall. For example, if the top wall is convex shaped and has securing ribs, the base wall is consequently substantially of the same dimension as the top wall, is concave shaped and has grooves corresponding to the securing ribs of said top wall. As a preferred option, a protruding opening closed by a cap on the top or base wall may serve as a securing rib for stable stacking with the corresponding groove of another stacked container.

As another preferred option for an embodiment of the present invention, said container comprises at least a transparent part which allows to look through into the container. Therefore, it is easy for the user to control the remaining amount of content in said container. This transparent part may be of any shape and dimension. Also the location of this part is not critical to the present invention. It is also possible that said container is completely transparent.

The container (10) is made of a flexible plastic material to allow to squeeze the container as described above. Furthermore, said container being made with a flexible material is also able to absorb the external forces during transport and storing acting on said container without the danger of permanent deformation or damage. Therefore, said container is also sufficiently resistant against damage or breakage. Using flexible materials, parts like the top wall and/or the base wall may be reinforced in respect to other parts to ensure a sure and stable standing and stacking. The plastic material may be chosen by any person skilled in the art. For example, high or low density polyethylene, polypropylene, polyethylene terephthalate or polyvinyl chloride are suitable plastic materials for the container. Blow molding is the preferred manufacturing process of these containers.

The metering device (20) comprises principally a plate (21). Said plate (21) is able to be reversibly slid to the inside of said container (10) within said hollow body (12). The sliding of said plate is controlled from the exterior of said container. Said plate slides along the internal wall of said side wall (16). Therefore the dimensions of said plate is correlated to the cross section area of said container. The cross section area is defined by a horizontal plane intersecting said container when said container stands in its upright position. In case the container comprises a neck of a smaller cross section, said neck conveying towards said opening (16), said plate slides along the internal wall of said neck. In the following, it is intended that the side wall (11) of said container includes the side wall of the neck. Therefore said plate has always the dimension covering the whole cross section area of said container or part thereof wherein said plate is able to slid towards or away from said opening (16). The shape of said plate follows the shape of said container which may be rounded or rectangular. Said plate comprises at least an orifice (Fig. 2b, 24).

Said metering device (20) further comprises a means to control the sliding of said plate from the exterior of said container (10). Preferably, said plate (21) is movable from the exterior through the lever (22). Said lever (22) is connected to said plate (21). At least the part (22a) of said lever is reachable from the exterior by a user who intends to move said plate upwards or downwards. The function of this lever may be achieved also with a rotating knob. This rotating knob, also connected to said plate, may be screwed in or out to change the position or height of said plate. As will be described in the following, the height of said plate meters a certain quantity or dose from the total content of said container. To define and to maintain certain determined heights or positions of said plate, said means to control the height of said plate inside said container may also comprise, as a preferred option, screw threads or snapping features or ratchets mechanisms.

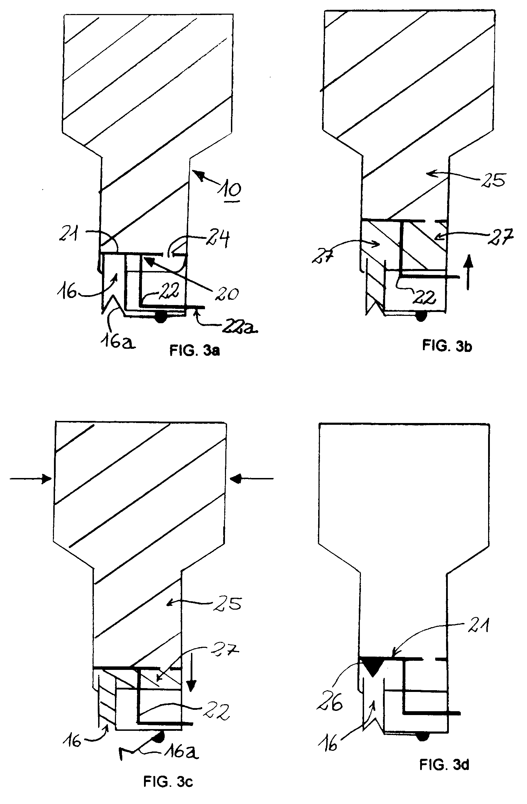

The measuring and the dispensing of a viscous, liquid product from the container (10) through said metering device (20) is schematically illustrated in Figures 3a to 3c. In this case, said opening (16) is on the base wall (15) of said container and is closed by the cap (16a). Also said metering device is mainly located in the lower part of said container. In Figure 3a the plate (21) is at its nearest position to said opening. At this stage no product is able to flow out of said container. To meter a dose, said part (22a) of said lever (22) is pushed upwards from the exterior of said container (10). Consequently, said plate is also pushed upwards inside said filled container, as shown in Figure 3b. Said plate is able to proceed upwards, since said plate also comprises said orifice (24). Indeed, a quantity of said contained product in the upper part (25) of said plate flows continuously through said orifice filling the volume (27) created under said plate. In case the product is very viscous, the volume above said plate (25) is compressed and the only passageway open to this compressed volume is said orifice (24) filling the volume (27) under said plate. Therefore the height of the part (22a) of said lever (22) determines a limited quantity or a dose of the product being in said volume (27) under said plate. This selection of a dose is not irreversible. Indeed, said lever can be pushed back again, conveying partially or entirely the previously selected dose back again above said plate.

As said before, the quantity under said plate (21) represents a certain metered quantity for a dose which can now be dispensed through said opening (16). In Figure 3c said cap (16a) has been detached. By squeezing said container, as indicated by the arrows, the volume in said container is reduced creating a compression towards said opening (16). Therefore, said plate (21) is pushed down and the metered dose below said plate is pressed out through said opening (16). Indeed, viscous, liquid products under said plate (27) will choose the easiest way to get away from the compression. The easiest way for this viscous, liquid product is given by said opening (16) of said container. This is especially true, if said orifice (24) is smaller than said opening (16) and not vertically aligned with said opening. Being not vertically aligned means that the contained viscous, liquid product over said plate (25) is not in direct communication with the exterior of said container when said plate is against said opening (16), i.e. said orifice does not directly communicate with said opening (16). Furthermore, the pressure existing at said orifice (24) exerted by the viscous, liquid product above said plate is counteracted by the dosed product under said plate. Thereby no product flows through said orifice in any direction during the dispensing action, i.e. the metered quantity being under said plate is neither decreased nor increased during dispensing. The viscosity of the contained product is preferably between 14000 cps and 20000 cps, more preferably between 16000 cps and 19000 cps. The viscosity is measured with a Contraves viscometer at a temperature of about 20°C and at a low shear rate of about 1 sec⁻¹.

For low level of viscosity, i.e. for viscosities comparable to the viscosity of water-like fluids (about 1 cps at about 20° C), said metering device (20) may comprise as a preferred option also a valve or permeable filters at said orifice (24). Said valve or permeable filter achieve the interruption of free flow through said orifice. Indeed, a flow of product from above said plate may continuously pass through said orifice increasing the dose during the dispensing action. Also the reversed may happen: a flow of the metered product may flow from under said plate through said orifice resulting in a smaller dispensed dose. Therefore, an increased or decreased amount of product is involuntarily dispensed in respect to the desired and predetermined dose.

On the contrary, a permeable filter attached on said orifice impedes such a free flow through said orifice. This permeable filter is a membrane with small or even micro-pores which has the effect to increase the force needed to pass through said filter. Indeed, an additional force is needed by the liquid to pass through said permeable filter to overcome the frictional loss experienced by passing through the pores. Another possibility is to use a valve which opens when said plate (21) is pushed away from said opening (16) for the metering of a dose of the liquid product. Whereas said valve closes when said plate is not moved and remains closed during the dispensing action, i.e. when said plate is pressed in the direction of said opening (16). Therefore, said plate comprising a valve or filter described before allows the dispensing of a metered quantity of liquid products having a low viscosity.

The dispensing is automatically ceased once the selected amount or dose is completely dispensed. Indeed, said plate closes said opening (16) from the inside of said container (10), once the volume (27) under said plate (21) is emptied. In this manner, the situation as shown in Figure 3a is reached again, when said opening (16) is closed on the inside with said plate and on the outside with said cap (16a). As a preferred option, said plate (21) may also further comprise a seal (26) shown in Figure 3d. This seal (26) improves the closing of said opening (16). Indeed, said seal closes said opening (16) from the inside of said container when said plate (21) arrives at the nearest position in respect to said opening. The dimensions of said seal is correlated to the dimensions of said opening (16) in order to close tightly said opening. The shape of said seal may be various. Preferably, the shape of said seal is spherical or conical.

The metering device (20) described above ensures that only a metered quantity of liquid product is dispensed, although said container is squeezed. Indeed, the metered amount is variable by sliding said plate (21) into different heights into said container. This metered quantity is variably selected just prior to the dispensing maintaining said container in its upright position. The metered dose is thereafter dispensed by squeezing the side wall (11) of said container. The squeezing pushes said plate towards said opening (16) of said container driving the metered dose outwards through said opening. Furthermore, the container according to the present invention avoids wasting of viscous, liquid product which remains stuck inside said container. This product is forced outside said opening (12) through the combined action of the squeezing and the sliding plate. A rapid and accurate dispensing of variable metered doses is therefore achieved without any waste.

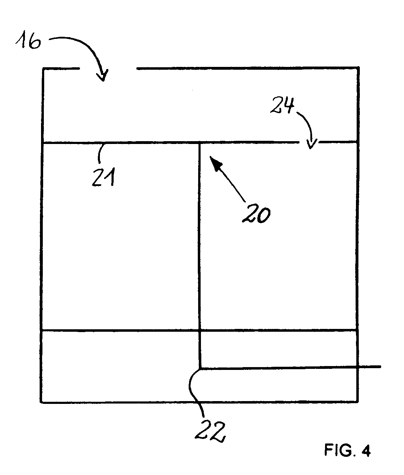

The location of said opening (16) relative to said metering device (20) may be various in the present invention. Said opening and said metering device can be located both on the top part of said container. In this case, said container has to be inverted upside down prior to the dispensing of a metered quantity. In another embodiment, said metering device may remain in the lower part of said container, as in Figure 3a, but with the opening on the top wall (15) of said container, as illustrated in Figure 4, or vice versa. In any case, to dose a certain quantity, said plate (21) has to be moved away from said opening. On the contrary, said plate has to be moved towards said opening to dispense the dosed quantity.

To have the possibility of refilling said container (10) with a liquid product, the top (15) or base (14) wall may also comprise a refilling opening. This refilling opening has a sufficient aperture to allow an easy refilling from a refilling bag or pouch. As a preferred option, the container comprises a leakage tight, reversibly detachable lid partially or completely substituting said top wall (15) of said container. Therefore, the refilling may be achieved either by having said refilling opening and/or detaching said lid. When said container comprises a lid, said opening (12) is then on said lid and said metering device (20) is preferably part of said lid or said metering device is completely inserted into a suitable orifice of said lid. This does not change the functioning mode of said metering device as will be described below. Preferably said lid is made of a plastic material and manufactured through injection molding.

The container according to the present invention can be used for any metering and dispensing of liquid substances. Preferably, said container may contain dish washing or laundry liquid detergent.

The present invention may be used in the following way:
- the plate (21) is moved away from the opening (16) of said container to meter a desired amount or a dose when the container (10) is closed and in its upright or upside down position;
- the metered dose can be changed by moving said plate further in the same direction as previously to increase the dose or in the opposite direction to decrease the dose;
- the cap is detached from said opening (16) of said container;
- said container is squeezed thereby moving said plate towards said opening to dispense the metered dose;
- the dispensing automatically stops once the metered dose has been dispensed, said plate thereby closing said opening of said container from the interior of said container.

## Claims

1. A squeezable container (10) for viscous, liquid products having a squeezable side wall (11) comprising an opening (16) and a metering device (20), characterized in that said metering device comprises a plate (21), said plate being able to close said opening (16), said plate being able to be reversibly slid to the inside of said container along said side wall (11) of said container to define a quantity of said viscous, liquid product to be dispensed, the sliding being controlled from the exterior of said container and said plate comprising at least an orifice (24), said orifice (24) being smaller than said opening (16) and said orifice being not vertically aligned with said opening.

2. A container according to claim 1 characterized in that said plate (21) is connected through a lever (22) or rotating knob with the exterior of said container, said lever or rotating knob being able to move said plate in different heights inside said container.

3. A container according to any of the preceding claims characterized in that said plate is defined and maintained in certain determined positions or heights through screw threads, or snapping features or ratchets mechanism.

4. A container according to any of the preceding claims characterized in that said plate further comprises a seal (26) to close said opening (16) from the inside of said container.

5. A container according to any of the preceding claims characterized in that said viscous, liquid products have a viscosity between 14,000 cps and 20,000 cps, preferably 16,000 cps and 19,000 cps.

6. A container according to any of the preceding claims characterized in that said plate further comprises a valve or a permeable filter at said orifice (24).

7. A container according to any of the preceding claims characterized in that said container further comprises a lid reversibly detachable from said container, said lid comprising said opening (16) of said container, and said metering device (20) being an integral part of said lid or said metering device being inserted into an orifice of said lid.

8. A container according to any of the preceding claims characterized in that said opening (16) of said container is closed by a reversibly detachable cap.

9. A method to dispense a liquid product from the container according to any of the preceding claims comprising the steps of:
• moving the plate (21) away from the opening (16) of said container to meter a desired amount or a dose when the container (10) is closed and in its upright or upside down position;
• the metered dose can be changed by moving said plate further in the same direction as previously to increase the dose or in the opposite direction to decrease the dose;
• the cap is detached from said opening (16) of said container;
• said container is squeezed thereby moving said plate towards said opening to dispense the metered dose;
• the dispensing automatically stops once the metered dose has been dispensed, said plate thereby closing said opening of said container from the interior of said container.
